# FASCICULE DE BREVET EUROPEEN

(11) **EP 2 072 376 B1**
(45) Date de publication et mention de la délivrance du brevet: **18.05.2011**
(21) Numéro de dépôt: 08170631.9
(22) Date de dépôt: 03.12.2008
(51) Int. Cl.: B62D 25/04, B62D 25/08, B62D 21/15

(54) **Pied avant renforcé de véhicule**
Verstärkte A-Säule eines Fahrzeugs
Reinforced A-pillar of a vehicle

(30) Priorité: 20.12.2007 FR 0760126
(43) Date de publication de la demande: 24.06.2009
(73) Titulaire: Peugeot Citroën Automobiles SA, 78140 Vélizy-Villacoublay (FR)
(72) Inventeur: Massif, Kévin, 78280, GUYANCOURT (FR); Grosset, Romain, 92380, GARCHES (FR)
(74) Mandataire: Fernandez, Francis Lionel

(56) Documents cités:
- EP-A- 1 132 280
- EP-A- 1 382 518
- WO-A-2005/056369
- DE-A1- 19 949 787
- DE-A1-102004 004 734
- FR-A- 2 816 575

## Description

La présente invention concerne un pied avant renforcé de véhicule, en particulier de véhicule automobile.

Le pied avant sert de structure porteuse pour certaines poutres du véhicule. De manière classique, le pied avant présente une structure de renfort qui est une pièce essentielle de la caisse du véhicule dans l'absorption des efforts dus à un choc frontal. Une telle structure limite la rotation autour d'un axe vertical du pied avant en cas de choc frontal. Cette rotation est due à la poussée sensiblement longitudinale du bandeau de porte, d'une part, et à la rotation autour d'un axe vertical du long pied due à la poussée du longeron sensiblement longitudinale et dirigée vers l'intérieur du véhicule, d'autre part. En limitant la rotation de pied avant, on assure la transmission des efforts à la fois dans la structure et dans la porte.

Différentes solutions techniques ont déjà été mises en oeuvre pour limiter cette rotation. Il est connu, par exemple, dans différents véhicules automobiles, d'avoir une équerre solidarisée d'une part à la traverse de planche de bord et, d'autre part, au pied avant. Cette liaison entre l'équerre et le pied avant est réalisée par une vis traversante, selon l'axe transversal du véhicule.

On connaît également, selon le document FR 2 800 698, un pied avant de véhicule automobile, qui intègre, en une seule pièce, un corps central allongé comportant à chacune de ses extrémités au moins un support d'extrémité de poutre. Une extrémité du corps central comporte deux supports d'extrémité de poutre. Un des supports comporte une paroi contre laquelle l'extrémité de la poutre associée vient en butée.

Un autre assemblage de pied avant de véhicule est décrit dans le document US 6 698 823 B2. Cet assemblage comporte un panneau latéral intérieur et un panneau latéral extérieur. Ces deux panneaux sont soudés ensemble de façon à former un ensemble dont la section transversale est en forme de boîte fermée. Un panneau extérieur de renfort latéral et un panneau d'assemblage supérieur de porte sont soudés ensemble et plaqués sur une surface interne du panneau latéral intérieur de manière séquentielle. Une bride externe est montée sur la surface interne du panneau latéral intérieur, avec les deux extrémités soudées au panneau d'assemblage supérieur de porte. De plus, une patte de renfort est insérée et soudée sur la surface interne du panneau d'assemblage supérieur de porte.

Le document EP 1132280 montre le préambule de la revendication 1 et décrit un renfort de pied avant pour véhicule automobile comportant deux parties, à savoir une partie supérieure et une partie inférieure dont le bord supérieur est situé légèrement au-dessus de la charnière supérieure de porte avant du véhicule.

Enfin, à titre d'exemple également, le document US 7 140 674 B2 décrit une structure de caisse de véhicule, qui comporte un corps latéral. L'ossature de ce corps latéral est constituée par un panneau de caisse, qui forme une surface interne de la caisse du véhicule, et par un organe de renfort, qui est réalisé à l'intérieur d'une forme s'étendant à l'intérieur du panneau de caisse et qui est relié à ce dernier. Cette structure de caisse comporte également une armature d'encadrement avant, qui forme un corps avant placé de manière à constituer une forme s'étendant à partir du corps latéral vers l'avant de la caisse du véhicule, et une armature d'encadrement externe, qui est reliée à l'armature d'encadrement avant à partir du côté de la caisse du véhicule et qui est rigidement fixée à l'organe de renfort au moyen de boulons qui traversent le panneau de caisse.

Le but de la présente invention est de fournir un pied avant renforcé de véhicule, en particulier de véhicule automobile, qui offre une raideur équivalente aux renforts de pied avant connus de l'art antérieur, qui permette de répondre aux contraintes des tests d'homologation des véhicules en choc frontal (procédures d'essais de chocs avant contre barrière), mais qui soit conçu et réalisé de manière plus simple et plus économique.

Pour parvenir à ces buts, la présente invention a pour objet un nouveau pied avant renforcé de véhicule, en particulier de véhicule automobile, qui est constitué en deux parties, à savoir une partie supérieure et une partie inférieure, et dans lequel ladite partie inférieure présente un bord supérieur situé légèrement au dessus de la charnière supérieure de porte avant du véhicule cette partie inférieure - désignée aussi « renfort de pied avant » - étant formée d'une seule pièce obtenue par emboutissage d'un matériau métallique en feuille, de façon à éviter de recourir à des raidisseurs spécifiques qui viendraient entretoiser les faces du renfort ce renfort de pied avant étant réalisé par une opération d'emboutissage selon la direction transversale du véhicule, de façon à présenter une forme générale de demie boîte qui lui apporte de la raideur et ce renfort de pied avant présentant une arête supérieure, qui vient fermer en partie la région supérieure de la forme en demie boîte de façon à apporter plus de raideur dans ladite région supérieure.

De préférence, l'arête supérieure est sensiblement horizontale, en position assemblée du renfort, de façon à offrir une raideur maximale à l'encontre des efforts transmis lors d'un choc frontal sur le véhicule.

En variante, l'arête supérieure peut être sensiblement inclinée par rapport à l'horizontale, cette inclinaison étant fonction de la raideur souhaitée à l'encontre des efforts transmis lors d'un choc frontal sur le véhicule.

Le renfort est obtenu, de préférence, par un procédé d'emboutissage à un seul outil de formage et trois outils seulement de découpe et/ou de finition.

L'invention a également pour objet un véhicule, en particulier un véhicule automobile, qui comporte des renforts de pied avant conformes au renfort de pied avant décrit ci-dessus dans ses grandes lignes.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 représente, de manière schématique, une structure de caisse avant de véhicule automobile et les efforts transmis par un choc frontal sur le véhicule,
- la figure 2 est une vue latérale, en perspective, d'un renfort de pied avant, selon la présente invention, et
- la figure 3 est une vue sensiblement de profil, en perspective, du renfort de pied avant de la figure 2.

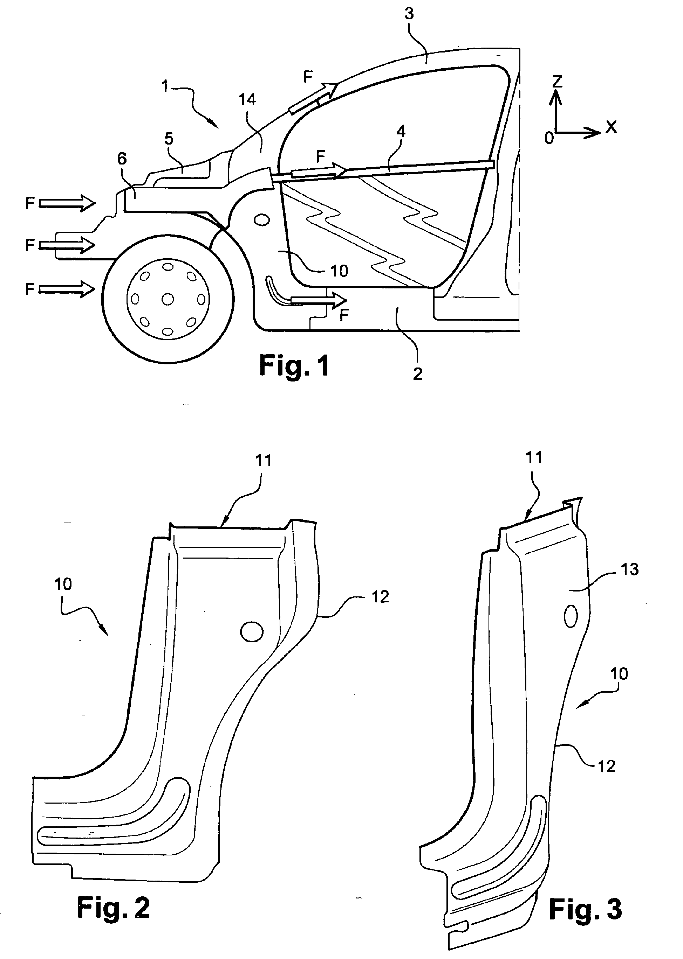

En référence au dessin de la figure 1, il est décrit une structure d'ensemble de pied avant/montant de baie de côté gauche, de référence générale 1. Cette description, toutefois, s'applique mutatis mutandis à une structure équivalente de côté droit.

Le pied avant est un noeud structurel sur lequel repose entre autres pièces un côté de caisse 2, un montant de baie 3, un bandeau de porte 4, un support d'aile 5, un renfort avant de côté d'habitacle 6. Les flèches F de la figure 1 représentent la diffusion dans la structure de caisse avant des efforts résultant d'un choc frontal.

En cas de choc frontal, la rotation du pied avant selon un axe vertical peut entraîner la déformation de l'habitacle, ce qui peut avoir des conséquences sur la sécurité des passagers. De plus, lors des tests d'homologation du véhicule en choc frontal mentionnés précédemment, la rotation du pied avant peut avoir pour conséquence que la porte s'échappe, c'est-à-dire se désolidarise de la structure de caisse du véhicule, ce qui interdit alors l'homologation du véhicule.

Pour limiter la rotation du pied avant, il faut des moyens permettant d'obtenir une raideur suffisante.

En référence aux figures 2 et 3, on a représenté un renfort de pied avant selon la présente invention, de référence générale 10, dont la structure et la configuration permettent d'assurer cette raideur suffisante. Ce nouveau renfort de pied avant 10 est constitué par une pièce unique, obtenue par emboutissage d'un métal ou alliage métallique en feuille. Elle constitue la partie inférieure du pied avant, située sous la partie supérieure ou gousset supérieur de pied avant 14 (voir également figure 1).

La pièce unique 10, obtenue par emboutissage, présente une forme de demie boîte 12, ou boîte ouverte ou récipient à fond plat 13, par conséquent une forme à section en forme de « U » de grande largeur et aux branches courtes.

La pièce emboutie présente une arête supérieure 11, qui vient fermer en partie la forme de demie boîte 12 de façon à apporter de la raideur à ladite pièce. L'arête supérieure 11 se situe sensiblement dans un plan vertical médian de la partie inférieure 10 en forme de demie boîte 12.

L'arête supérieure 11 est sensiblement horizontale, en position montée du renfort de pied 10, de façon à offrir une raideur maximale à l'encontre des efforts F (figure 1) dus à un choc frontal sur le véhicule.

En variante, l'arête supérieure 11 peut être sensiblement inclinée par rapport à l'horizontale, cette inclinaison étant fonction de la raideur souhaitée à l'encontre des efforts F dus à un choc frontal sur le véhicule.

La partie inférieure 10 est obtenue par un procédé d'emboutissage à un seul outil de formage et trois outils seulement de découpe et/ou de finition, ce qui est un mode de fabrication plus économique.

La présente invention présente l'avantage d'apporter une raideur équivalente aux renforts à raidisseurs connus de l'art antérieur, mais avec moins de pièces et moins de masse. La diminue de masse peut atteindre une réduction voisine de 40%.

En particulier, l'arête supérieure 11 décrite ci-dessus permet de gagner deux raidisseurs en haut de renfort de pied avant, par conséquent un gain économique substantiel du fait de la suppression de la préparation des raidisseurs et de la diminution des points de soudure.

La présente invention concerne aussi un véhicule, en particulier un véhicule automobile, qui comporte des renforts de pied avant conformes au renfort de pied avant décrit ci-dessus.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Pied avant renforcé de véhicule, en particulier de véhicule automobile, étant constitué en deux parties, à savoir une partie supérieure (14) et une partie inférieure (10), et en ce que ladite partie inférieure (10) présente un bord supérieur situé légèrement au dessus de la charnière supérieure de porte avant du véhicule, **caractérisé en ce que** ladite partie inférieure (10) - désignée aussi « renfort de pied avant (10) » - étant formée d'une seule pièce obtenue par emboutissage d'un matériau métallique en feuille, de façon à éviter de recourir à des raidisseurs spécifiques qui viendraient entretoiser les faces du renfort, ledit renfort de pied avant (10) étant réalisé par une opération d'emboutissage selon la direction transversale du véhicule, de façon à présenter une forme générale de demie boîte (12) qui lui apporte de la raideur, ledit renfort de pied avant (10) présentant une arête supérieure (11), qui vient fermer en partie la région supérieure de la forme en demie boîte (12) de façon à apporter plus de raideur dans ladite région supérieure.

2. Pied avant renforcé selon la revendication **1, caractérisé en ce que** ladite arête supérieure (11) est sensiblement horizontale, en position assemblée du renfort, de façon à offrir une raideur maximale à l'encontre des efforts transmis lors d'un choc frontal sur le véhicule.

3. Pied avant renforcé selon la revendication **1, caractérisé en ce que** ladite arête supérieure (11) est sensiblement inclinée par rapport à l'horizontale, cette inclinaison étant fonction de la raideur souhaitée à l'encontre des efforts transmis lors d'un choc frontal sur le véhicule.

4. Pied avant renforcé selon l'une quelconque des revendications 1 à **3, caractérisé en ce que** ledit renfort (10) est obtenu par un procédé d'emboutissage à un seul outil de formage et trois outils seulement de découpe et/ou de finition.

5. Véhicule, en particulier véhicule automobile, **caractérisé en ce qu'**il comporte des pieds avant renforcés conformes au pied avant renforcé selon l'une quelconque des revendications 1 à **4.**

## Claims

1. Reinforced A-pillar of a vehicle, in particular a motor vehicle, consisting of two parts, namely an upper part (14) and a lower part (10), said lower part (10) having an upper edge situated slightly above the upper front door hinge of the vehicle, **characterised in that** said lower part (10) - also referred to as "A-pillar reinforcement (10)" - is formed in a single piece obtained by stamping a sheet metal material in such a way as to avoid the use of stiffeners which would space-apart the faces of the reinforcement, said A-pillar reinforcement (10) being produced by a stamping operation in the transverse direction of the vehicle in such a way that the reinforcement has the general shape of a half box (12) which gives the reinforcement stiffness, said A-pillar reinforcement (10) having an upper ridge (11) which closes the upper region of the half-box shape (12) in part, in such a way as to provide additional stiffness in said upper region.

2. Reinforced A-pillar according to claim 1, **characterised in that** said upper ridge (11) is substantially horizontal in the assembled position of the reinforcement, so as to provide maximum stiffness against forces transmitted in the event of a frontal impact on the vehicle.

3. Reinforced A-pillar according to claim 1, **characterised in that** said upper ridge (11) is substantially inclined to the horizontal, this inclination being a function of the desired stiffness against forces transmitted in the event of a frontal impact on the vehicle.

4. Reinforced A-pillar according to any one of claims 1 to 3, **characterised in that** said reinforcement (10) is obtained by a stamping process using a single shaping tool and only three cutting and/or finishing tools.

5. Vehicle, in particular a motor vehicle, **characterised in that** it comprises reinforced A-pillars in accordance with the reinforced A-pillar according to any one of claims 1 to 4.

## Patentansprüche

1. Verstärkte A-Säule eines Fahrzeugs, insbesondere eines Kraftfahrzeugs, die aus zwei Teilen besteht, nämlich einem oberen Teil (14) und einem unteren Teil (10), und wobei der untere Teil (10) einen oberen Rand aufweist, der sich geringfügig oberhalb des oberen Vordertürscharniers des Fahrzeugs befindet, **dadurch gekennzeichnet, dass** der untere Teil (10) - auch als "A-Säulen-Verstärkung (10)" bezeichnet - aus einem Stück geformt ist, das durch Tiefziehen eines Metallfolienmaterials erhalten wird, um ein Zurückgreifen auf spezifische Versteifungen zu vermeiden, die die Seiten der Verstärkung verstreben würden, wobei die A-Säulen-Verstärkung (10) durch einen Tiefziehvorgang in Querrichtung des Fahrzeugs hergestellt wird, um eine allgemeine Form eines Halbgehäuses (12) aufzuweisen, die ihr Steifheit verleiht, wobei die A-Säulen-Verstärkung (10) eine Oberkante (11) aufweist, die zum Teil den oberen Bereich der Halbgehäuseform (12) verschließt, um dem oberen Bereich mehr Steifheit zu verleihen.

2. Verstärkte A-Säule nach Anspruch 1, **dadurch gekennzeichnet, dass** die Oberkante (11) in der zusammengebauten Stellung der Verstärkung im Wesentlichen waagrecht ist, um eine maximale Steifheit gegenüber den bei einem Frontalaufprall auf das Fahrzeug übertragenen Kräften zu bieten.

3. Verstärkte A-Säule nach Anspruch 1, **dadurch gekennzeichnet, dass** die Oberkante (11) bezüglich der Waagrechten im Wesentlichen geneigt ist, wobei diese Neigung von der gewünschten Steifheit gegenüber den bei einem Frontalaufprall auf das Fahrzeug übertragenen Kräften abhängt.

4. Verstärkte A-Säule nach einem der Ansprüche 1 bis 3, **dadurch gekennzeichnet, dass** die Verstärkung (10) durch ein Tiefziehverfahren mit nur einem Formgebungswerkzeug und nur drei Werkzeugen zum Schneiden und/oder zur Fertigbearbeitung erhalten wird.

5. Fahrzeug, insbesondere Kraftfahrzeug, **dadurch gekennzeichnet, dass** es verstärkte A-Säulen gemäß der verstärkten A-Säule nach einem der Ansprüche 1 bis 4 aufweist.
